(19) **Europäisches Patentamt**

**European Patent Office**

**Office européen des brevets**

(11) **EP 1 052 379 A2**

(12) **EUROPÄISCHE PATENTANMELDUNG**

(43) Veröffentlichungstag:
**15.11.2000  Patentblatt 2000/46**

(51) Int Cl.⁷: **F01L 1/344**

(21) Anmeldenummer: **00890149.8**

(22) Anmeldetag: **11.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **12.05.1999  AT 85399**
**12.05.1999  AT 85499**

(71) Anmelder: **TCG UNITECH Aktiengesellschaft**
**4560 Kirchdorf/Krems (AT)**

(72) Erfinder: **Heer, Siegfried, Ing.**
**4560 Kirchdorf, Krems (AT)**

(74) Vertreter: **Babeluk, Michael, Dipl.-Ing. Mag.**
**Patentanwalt**
**Mariahilfer Gürtel 39/17**
**1150 Wien (AT)**

(54) **Verstelleinrichtung für die Nockenwelle einer Brennkraftmaschine**

(57)     Die vorliegende Erfindung betrifft eine Verstelleinrichtung für die Nockenwelle (1, 101, 301, 401, 501, 601) einer Brennkraftmaschine mit innerer Verbrennung, mit einem Antriebsrad (3, 103, 303, 503) zum Antrieb der Nockenwelle (1, 101, 301, 401, 501, 601), das koaxial zur Nockenwelle angeordnet ist und das über einen Verstellmotor mit der Nockenwelle (1, 101, 301, 401, 501, 601) verbunden ist, um eine Relativbewegung zwischen dem Antriebsrad (3, 103, 303, 503) und der Nockenwelle (1, 101, 301, 401, 501, 601) zu bewirken. Eine wesentliche Vereinfachung wird dadurch erreicht, dass das Antriebsrad (3, 103, 303, 503) über einen reibschlüssigen Antrieb mit einer Kurbelwelle (6) der Brennkraftmaschine (5) gekoppelt ist und dass der Verstellmotor dazu ausgebildet ist, eine unbegrenzte Relativbewegung zwischen dem Antriebsrad (3, 103, 303, 503) und der Nockenwelle (1, 101, 301, 401, 501, 601) zu bewirken.

Fig.1

**Beschreibung**

Die Erfindung betrifft eine Verstelleinrichtung für die Nockenwelle einer Brennkraftmaschine mit innerer Verbrennung, mit einem Antriebsrad zum Antrieb der Nockenwelle, das koaxial zur Nockenwelle angeordnet ist und das über einen Verstellmotor mit der Nockenwelle verbunden ist, um eine Relativbewegung zwischen dem Antriebsrad und der Nockenwelle zu bewirken.

Um in verschiedenen Bereichen des Motorkennfeldes optimale Verbrauchs- und Abgaswerte zu erzielen, ist es erforderlich, die Ventilsteuerzeiten in Abhängigkeit verschiedener Betriebsparameter zu verändern. Eine solche Veränderung der Steuerzeiten kann in eleganter Weise durch eine Verdrehung der Nockenwelle in Bezug auf das sie antreibende Rad bewirkt werden. Die Nockenwelle einer Brennkraftmaschine wird üblicherweise durch ein Kettenrad, das mit der Kurbelwelle über eine Antriebskette verbunden ist, oder ein als Riemenscheibe ausgebildetes Antriebsrad, das über einen Zahnriemen mit der Kurbelwelle in Verbindung steht, angetrieben.

Die GB 2 221 513 A zeigt eine Verstellvorrichtung für Nockenwellen, bei der ein Elektromotor eine Gruppe von Hebeln betätigt, die die Nockenwelle gegenüber dem Antriebsrad verdrehen. Zu diesem Zweck wird ein Betätigungselement, an dem die Hebel angelenkt sind, in Axialrichtung verschoben. Eine solche Lösung ist jedoch aufwendig und aufgrund der Vielzahl von Lagern mit einem großen Spiel behaftet.

Aus der DE 41 10 088 Cl und aus der DE 39 29 619 A1 sind Verstelleinrichtungen bekannt, bei denen zwischen einem mit der Nockenwelle in Verbindung stehenden Bauteil und einem mit dem Antriebsrad in Verbindung stehenden Bauteil ein Verstellelement vorgesehen ist, das zwei Schrägverzahnungen aufweist, die mit entsprechenden Verzahnungen der Nockenwelle bzw. des Antriebsrades in Eingriff stehen. Durch eine Axialverschiebung dieses Verstellelements kann eine Verdrehung der Nockenwelle gegenüber dem Antriebsrad bewirkt werden.

Aus der US 5,381,764 A, der US 5,243,935 A und der US 4,744,338 A sind Einrichtungen zur Verstellung der Nockenwelle einer Brennkraftmaschine bekannt, bei denen ein Antrieb über einen Riemen vorgesehen ist. Da alle diese Einrichtungen nur einen begrenzten Verstellbereich aufweisen, handelt es sich bei den Riementrieben zwangsläufig um formschlüssige Antriebe, da ansonsten eine korrekte Phasenlage der Nockenwelle nicht gewährleistet werden kann.

Weiters ist aus der DE 41 01 676 A1 eine elektrische Verstellvorrichtung bekannt, bei der ein Elektromotor vorgesehen ist, der über eine Gewindespindel das Verstellelement verschiebt.

Da sich jedoch das Verstellelement im wesentlichen mit Nockenwellendrehzahl dreht, muss zwischen dem Elektromotor und dem Verstellelement ein Axialdrucklager vorgesehen sein, das die Relativbewegung zwischen dem verdrehfesten und dem sich drehenden Bauteil aufnimmt. Eine ähnliche Lösung ist in der DE 33 20 835 A1 beschrieben, wobei die gleichen Nachteile auftreten.

Die DE 36 07 256 A beschreibt eine Vorrichtung, bei der ein Schrittmotor zur Verstellung der Nockenwelle vorgesehen ist, der einerseits mit der Nockenwelle und andererseits mit dem Antriebsrad verbunden ist. Da dieser Schrittmotor das gesamte Antriebsmoment der Nockenwelle aufnehmen muss, ist eine solche Lösung mit vernünftigem Aufwand nicht realisierbar.

Ferner zeigt die EP 0 596 860 A eine Vorrichtung zur Verstellung der Ventilöffnungszeiten, bei der die Nockenwelle hohl ausgeführt ist, und eine Innenwelle enthält. Die Nocken sind zweiteilig ausgeführt, wobei die einzelnen Nockenabschnitte um einen bestimmten Winkel gegeneinander verdreht werden können. Die Verdrehung der beiden Nockenabschnitte erfolgt durch einen sich mitdrehenden Elektromotor, der über Schleifringe versorgt wird.

Ebenso zeigt ein älterer Vorschlag der Anmelderin, veröffentlicht in der EP 0 903 471 A, eine Nockenwellenverstelleinrichtung mit einem Planetengetriebe, bei der die Verstellung durch einen Elektromotor erfolgt, der über Schleifkontakte mit Strom versorgt wird.

Allen oben genannten Lösungen ist gemeinsam, dass die grundsätzliche Phasenlage der Nockenwelle in bezug auf die Kurbelwelle durch ein formschlüssiges Antriebsmittel, wie etwa einen Kettentrieb oder einen Zahnriemen festgelegt ist. Ausgehend von dieser Grundstellung ist eine begrenzte Verstellung der Nockenwelle möglich, um die Steuerzeiten zu verändern. Solche formschlüssige Antriebsmittel sind stets aufwendig, und in vielen Fällen ist es notwendig, zusätzliche Antriebsmittel für den Antrieb von Nebenaggregaten, wie etwa Lichtmaschine, Kühlwasserpumpe oder Klimakompressor vorzusehen.

Aufgabe der vorliegenden Erfindung ist es, diese Nachteile zu vermeiden und eine Vorrichtung der oben beschriebenen Art so weiterzubilden, dass der Antrieb der Nockenwelle so einfach wie möglich gestaltet werden kann.

Erfindungsgemäß ist vorgesehen, dass das Antriebsrad über einen reibschlüssigen Antrieb mit einer Kurbelwelle der Brennkraftmaschine gekoppelt ist und dass der Verstellmotor dazu ausgebildet ist, eine unbegrenzte Relativbewegung zwischen dem Antriebsrad und der Nockenwelle zu bewirken.

Als reibschlüssiger Antrieb wird ein solcher bezeichnet, der auf eine durchgehende formschlüssige Verbindung verzichtet, wie dies etwa bei Zahnradgetrieben, Kettentrieben oder Zahnriemenantrieben der Fall ist. Reibschlüssig arbeiten Flachriemen, Keilriemen oder Reibradgetriebe.

Wesentlich an der Erfindung ist, dass auf eine durch mechanische Mittel vorgegebene Verbindung zwischen Nockenwelle und Kurbelwelle verzichtet wird, die eine Phasenlage unveränderlich vorgibt, von der aus eine bestimmte Verstellung möglich ist. Dadurch kann eine wesentliche Vereinfachung und eine Kosteneinsparung erzielt werden. Die bei einer reibschlüssigen Verbindung, wie etwa einem gewöhnlichen Riementrieb, auftretenden Phänomene, die eine Verwendung eines solchen Antriebs normalerweise verhindern, wie etwa Schlupf oder Veränderungen durch Verschleiß, werden durch die Verstellung ausgeglichen. Im Gegensatz zu bekannten Lösungen ist dabei eine unbegrenzte Verstellbewegung vorgesehen, das heißt, dass die Nockenwelle in Bezug auf das Antriebsrad beliebig verdreht werden kann und nicht nur in einem bestimmten Winkelbereich.

Durch den Wegfall einer formschlüssigen Verbindung ist eine mechanische Begrenzung des Verstellwinkels der Nockenwelle bei Ausfall der Verstelleinrichtung nicht mehr gegeben. Daher ist ein Betrieb der Brennkraftmaschine nur bei funktionstüchtiger Verstelleinrichtung möglich. Im allgemeinen besteht bei Ottomotoren keine Gefahr der Beschädigung, wenn die Nockenwelle durch einen Defekt völlig verstellt ist. Bei Dieselmotoren kann es jedoch in einem solchen Fall zu einer Kollision zwischen einem Ventil und einem Kolben kommen, was zu einer Beschädigung der Brennkraftmaschine führt. Daher wird es angezeigt sein, die elektronische Steuerung der Verstelleinrichtung so auszulegen, dass bei einer Störung die Brennkraftmaschine sofort abgeschaltet wird. Weiters sollte in einem solchen Fall vor dem Starten der Zustand, d.h. die Winkellage der Nockenwelle überprüft werden. Dazu wird beim Abstellen der Brennkraftmaschine der jeweilige Zustand elektronisch gespeichert, um die Informationen beim nächsten Start zur Verfügung zu haben. Jedenfalls aber wird die augenblickliche Lage der Nockenwelle durch einen geeigneten Sensor, wie etwa einen Hall-Sensor laufend erfasst, um die Verstelleinrichtung zu steuern. Eine solche Erfassung wird allgemein bei Motoren mit verstellbaren Nockenwellen eingesetzt.

Vorzugsweise ist der Verstellmotor als Elektromotor ausgebildet, der über ein Getriebe mit dem Antriebsrad und der Nockenwelle verbunden ist. Eine elektrische Verstellung bietet den Vorteil eines schnellen Ansprechverhaltens und der kostengünstigen Verfügbarkeit. Außerdem werden die Ressourcen der Brennkraftmaschine, wie das Ölsystem nicht belastet.

In einer besonders bevorzugten Ausführungsvariante der Erfindung ist vorgesehen, dass der Elektromotor mit der Nockenwelle oder dem Antriebsrad fest verbunden ist. Durch einen sich mit der Nockenwelle oder dem Antriebsrad mitdrehenden Elektromotor kann eine Lösung erreicht werden, bei der ein ausreichend großes Übersetzungsverhältnis die Verwendung eines Elektromotors mit einer relativ geringen Leistung ermöglicht, wobei jedoch das Getriebe im stationären Fall abgesehen von der Drehung um die eigene Achse stillsteht, so dass keine Geräuschentwicklung entsteht und keine Reibungsverluste auftreten.

Ein sich mitdrehender Elektromotor kann über Schleifringe mit Strom versorgt werden. In einer alternativen Ausführungsvariante ist jedoch vorgesehen, dass der Elektromotor zwei konzentrisch zueinander angeordnete Rotoren umfasst, von denen einer direkt mit der Nockenwelle oder dem Antriebsrad verbunden ist und von denen der andere mit dem Getriebe verbunden ist, und dass mit einem der Rotoren eine Spulenanordnung verbunden ist, die mit einer feststehenden Spulenanordnung in elektromagnetischer Wechselwirkung steht, um die Energie zur Ansteuerung von Wicklungen berührungslos zu übertragen, die auf zumindest einem Rotor angeordnet sind.

Wesentlich dabei ist, dass der Elektromotor, der die Verstellung der Nockenwelle bewirkt, berührungslos durch eine Spulenanordnung angesteuert wird. Die Energie wird dabei in der Art eines Transformators über einen Luftspalt übertragen. Da es sich bei dem Elektromotor um einen rotierenden Bauteil handelt, wird in der vorliegenden Beschreibung nicht zwischen Stator und Rotor des Elektromotors unterschieden, wie dies allgemein üblich ist, sondern es wird von zwei Rotoren gesprochen. Einer der Rotoren ist grundsätzlich mit der Nockenwelle verbunden, während der andere Rotor mit dem Antriebsrad verbunden ist, das als Kettenrad oder als Riemenscheibe zur Aufnahme eines Zahnriemens ausgebildet sein kann. Da das erforderliche Drehmoment zur Verstellung der Nockenwelle relativ groß ist und andererseits der Verstellwinkel relativ klein ist, ist es erforderlich, ein Getriebe vorzusehen, das ein relativ großes Übersetzungsverhältnis aufweist.

Vorzugsweise ist vorgesehen, dass die Spulenanordnungen jeweils aus mindestens einer Wicklung bestehen, die im wesentlichen in Umfangsrichtung angeordnet ist. Auf diese Weise wird erreicht, dass der durch die Spulenanordnung übertragene elektrische Strom unabhängig von der Drehzahl der Nockenwelle ist. Dies ist insofern wichtig, als die Übertragung durch die Spulenanordnung nicht nur die Leistung für den Betrieb des Elektromotors zur Verfügung stellt, sondern auch die Steuerungsinformationen beinhaltet.

In einer besonders bevorzugten Ausführungsvariante der Erfindung ist vorgesehen, dass ein Rotor des Elektromotors als im wesentlichen rohrformige Hülse ausgebildet ist, die an ihrem inneren Umfang eine Wicklung trägt, die mit einer Wicklung oder einem Permanentmagneten am anderen Rotor in elektromagnetischer Wechselwirkung steht, und dass die Hülse an ihrem äußeren Umfang eine Spulenanordnung aufweist, die mit einer feststehenden Spulenanordnung zusammenwirkt. Auf diese Weise wird eine besonders einfache Lagerung der beweglichen Bauteile ermöglicht. Beispielsweise kann der innere Rotor Permanentmagnete tragen, die mit Wicklungen in Wechselwirkung stehen, die am inneren Umfang des äußeren Rotors angeordnet sind. Durch Anlegen eines Wechselstroms entsprechender Frequenz an den äußeren Rotor kann der Elektromotor in der Art einer Synchronmaschine betrieben werden. Theoretisch ist es auch möglich, den inneren Rotor als Käfigläufer auszubilden, und den Elektromotor als Asynchronmotor zu betrieben. Diese Varianten besitzen den Vorteil, dass der innere Rotor nicht mit Energie von außen versorgt werden muss. Eine erhöhte Leistung kann jedoch dadurch erreicht werden, dass auch der innere Rotor elektromagnetisch angeregt wird.

Besonders günstig ist es dabei, wenn die Hülse fest mit dem Antriebsrad verbunden ist. Die feste Verbindung soll auch den Fall umfassen, bei dem die Hülse mit dem Antriebsrad einstückig ausgebildet ist.

Durch die vorzugsweise Ausbildung des inneren Rotors als rohrförmige Hülse kann der Aufbau der Vorrichtung und insbesondere die Montage, wesentlich erleichtert werden, da die gesamte Verstellvorrichtung im wesentlichen mit einer einzigen Schraube an der Nockenwelle befestigt werden kann.

Eine besonders bevorzugte Ausführungsvariante der vorliegenden Erfindung sieht vor, dass das Getriebe aus einem starren, kreisförmigen Hohlrad und einem flexiblen außen verzahnten Zahnrad besteht, das auf einem Wälzlager mit elliptischem Innenring angeordnet ist und das mit dem Hohlrad in Eingriff steht. Wie bereits oben beschrieben, ist ein relativ großes Übersetzungsverhältnis zwischen dem Elektromotor und dem von ihm angetriebenen Bauteil erforderlich. Das dazu verwendete Getriebe soll möglichst geringen Bauraum beanspruchen und robust sein. Als besonders günstig hat sich in diesem Zusammenhang ein sogenanntes Harmonie-Drive-Getriebe herausgestellt. Bei einem solchen Getriebe steht ein flexibles, elliptisches Zahnrad mit einem starren, kreisförmigen Hohlrad in Eingriff, die Verformung des Zahnrades wird durch ein Spezialwälzlager mit einem elliptischen Innenring bewirkt. Ein sehr großes Untersetzungsverhältnis ergibt sich dadurch, dass die Zähnezahl des Zahnrades nur geringfügig kleiner ist, als die des Hohlrades. Beträgt beispielsweise die Anzahl der Zähne des Hohlrades 100 und die Anzahl der Zähne des elliptischen Zahnrades 98, so ergibt sich ein Übersetzungsverhältnis von etwa 1:50. Da dies durch ein einstufiges Getriebe ohne Verwendung von Planetenrädern od. dgl. erzielt wird, kann auf diese Weise die erfindungsgemäße Vorrichtung äußerst kompakt ausgeführt werden.

Eine besonders günstige Lösung ist in diesem Zusammenhang dann gegeben, wenn ein Rotor mit dem elliptischen Innenring des Wälzlagers direkt verbunden ist.

Weiters ist es vorteilhaft, wenn das innen verzahnte Zahnrad fest mit einem Rotor verbunden ist. Durch diese Maßnahmen kann ein einfacher und kompakter Aufbau erreicht werden.

In einer weiteren Ausführungsvariante der Erfindung ist vorgesehen, dass jeder der beiden Rotoren mit einer unabhängigen Spulenanordnung ausgestattet ist, von denen jede mit einer entsprechenden feststehenden Spulenanordnung in Wirkverbindung steht. Durch die unabhängige Ansteuerung kann in einfacher Weise ebenfalls eine unabhängige Ansteuerung von Wicklungen beider Rotoren erreicht werden.

Bevorzugt ist vorgesehen, dass der Elektromotor ein Gehäuse aufweist, das fest mit dem Antriebsrad verbunden ist, und das zumindest teilweise in diesem angeordnet ist, und dass der Elektromotor einen Rotor aufweist, der als Scheibenläufer ausgebildet ist, der in einem Spalt zwischen zwei Gehäusehälften des Elektromotors angeordnet ist.

Durch diese Ausbildung wird erreicht, dass die Verstellvorrichtung geringstmögliche axiale Abmessungen aufweist. Da der Rotor des Elektromotors als Scheibenläufer ausgebildet ist, kann durch einen vergleichsweise großen Durchmesser ein hohes Drehmoment erreicht werden. Eine besonders günstige konstruktive Lösung ergibt sich, wenn der Scheibenläufer innerhalb des Antriebsrades angeordnet ist. Dabei wird auch der Bauraum innerhalb des Antriebsrades für die Verstellvorriehtung ausgenützt.

In einer weiteren bevorzugten Ausführungsvariante ist zwischen dem Antriebsrad und der Nockenwelle ein Getriebe angeordnet, bestehend aus einer ersten Eingriffsfläche, die am inneren Umfang eines ersten Eingriffsteils angeordnet ist, einer zweiten Eingriffsfläche, die am äußeren Umfang eines flexiblen Eingriffsteils angeordnet ist und mit der ersten Eingriffsfläche in Eingriff steht, und einem zum ersten Eingriffsteil und zum flexiblen Eingriffsteil koaxialen Treibteil, an dem ein Wälzlager mit einem unrund ausgebildeten Innenring angeordnet ist, das einen flexiblen Außenring aufweist, der mit dem flexiblen Eingriffsteil verbunden ist und diesen an vorzugsweise zwei Stellen gegen den ersten Eingriffsteil drückt. Ein solches in der Praxis als Harmonic-Drive-Getriebe bezeichnetes Getriebe hat sich als kostengünstige Lösung bewährt, die eine robuste und platzsparende Bauweise ermöglicht.

Bei einer ersten Variante dieses Getriebes sind die Eingriffsflächen verzahnt ausgeführt. Auf diese Weise können Standardbauteile in kostengünstiger Weise verwendet werden.

Alternativ dazu kann vorgesehen sein, dass die erste Eingriffsfläche des ersten Eingriffsteils mit der zweiten Eingriffsfläche des flexiblen Eingriffsteils in einer reibschlüssigen Verbindung steht. Dabei ist zwar die eindeutige phasenmäßige Zuordnung der einzelnen Komponenten und das genaue Übersetzungsverhältnis eines Zahnradgetriebes nicht mehr gegeben, aber es kann dafür eine Unempfindlichkeit gegen Überbelastung erreicht werden, die bei einem Zahnradgetriebe nicht gegeben ist. Weiters ist ein solches Getriebe unempfindlich gegenüber Schmutz und anspruchslos in bezug auf Schmierung.

Ein weiterer Vorteil dieser Lösung besteht darin, dass die Exzentrizität des Wave Generators deutlich geringer ausgeführt werden kann als bei einem herkömmlichen Getriebe mit Verzahnungen. Dabei ist es nämlich erforderlich, die Exzentrizität so groß zu machen, dass die Zähne der ersten und der zweiten Eingriffsfläche außerhalb der Eingriffsbereiche nicht miteinander in Konflikt kommen. Dabei ist die Exzentrizität nur durch den geringen Weg bestimmt, der erforderlich ist, die reibschlüssige Verbindung herzustellen. Daher ist die Verformung des flexiblen Eingriffsteils im Betrieb deutlich geringer, was die Verluste verringert und die Standzeit erhöht.

Grundsätzlich ist es möglich, dass die erste und die zweite Eingriffsfläche an einer, an zwei oder an drei oder mehr Stellen in Eingriff stehen. Als besonders günstig hat es sich jedoch herausgestellt, wenn zwei gegenüberliegende Eingriffspunkte vorgesehen sind. Bei einer solchen Lösung ist der Innenring des Wälzlagers im Querschnitt im wesentlichen elliptisch ausgebildet.

Eine sichere Kraftübertragung kann insbesondere dadurch erreicht werden, wenn die erste Eingriffsfläche kegelförmig mit kleinem Öffnungswinkel ausgebildet ist. Auf diese Weise kann auch ein allfälliger Verschleiß ausgeglichen werden. Besonders günstig ist es in diesem Zusammenhang, wenn der Öffnungswinkel zwischen 1° und 10°, vorzugsweise zwischen 2° und 6° beträgt. Der Wave Generator wird in diesem Fall vorzugsweise so ausgeführt, dass der Außenring des Wälzlagers kegelförmig mit kleinem Öffnungswinkel ausgebildet ist. Dabei sollte der Öffnungswinkel des Außenrings im wesentlichen dem der ersten Eingriffsfläche entsprechen.

Besonders vorteilhaft ist es, wenn ein Anpressmittel vorgesehen ist, das die erste Eingriffsfläche in Axialrichtung auf die zweite Eingriffsfläche drückt. Dadurch kann eine selbständige Einstellung der Anpresskraft und damit des übertragbaren Moments erreicht werden. Vorzugsweise weist das Anpressmittel eine Feder auf, die den ersten Eingriffsteil und den flexiblen Eingriffsteil in Axialrichtung gegeneinander vorspannt.

In einer besonders günstigen Ausführungsvariante der vorliegenden Erfindung ist vorgesehen, dass das Antriebsrad durch einen Keilrippenriemen angetrieben ist. Bei einem solchen Keilrippenriemen handelt es sich um ein allgemein verfügbares Bauelement, das sich in der Verwendung in der Automobilindustrie durchgesetzt hat. Bisher war der Einsatz jedoch auf den Antrieb von Zusatzaggregaten beschränkt. Ein Keilrippenriemen besitzt deutliche Kostenvorteile gegenüber einem Zahnriemen.

Eine besonders günstige Lösung ist gegeben, wenn das Antriebsrad durch einen Riementrieb angetrieben ist, der auch Zusatzaggregate, wie etwa eine Lichtmaschine, eine Lenkhilfepumpe oder einen Klimakompressor antreibt. Auf diese Weise kann mit einem einzigen Riementrieb das Auslangen gefunden werden. Neben den geringeren Kosten einer solchen Lösung ist besonders wichtig, dass durch den Wegfall einer Riemenebene im Vergleich zu einer herkömmlichen Lösung mit Zahnriemen für den Nockenwellenantrieb um Keilrippenriemen für die Zusatzaggregate eine deutliche Verkürzung der Baulänge der Brennkraftmaschine erreicht werden kann. Analoge Vorteile ergeben sich im Vergleich zu herkömmlichen Lösungen mit einem Kettentrieb.

Ferner kann vorgesehen sein, dass das Übersetzungsverhältnis, mit dem das Antriebsrad angetrieben wird, von dem theoretisch erforderlichen Übersetzungsverhältnis abweicht, wobei vorzugsweise ein geringfügig schnellerer Antrieb gegeben ist. Dabei ist es besonders günstig, wenn der Antrieb des Antriebsrades um 0,5% bis 4%, vorzugsweise um 1% bis 2,5% gegenüber dem theoretisch erforderlichen Übersetzungsverhältnis voreilt. Eine solche Maßnahme kann vorgesehen sein, um den unvermeidlichen Schlupf des Keilrippenriemens auszugleichen. Es kann aber auch eine über den zu erwartenden Schlupf hinausgehende Voreilung eingestellt werden. Auf diese Weise wird berücksichtigt, dass eine Vorverstellung der Nockenwelle ein höheres Drehmoment erfordert als eine Verstellung in die entgegengesetzte Richtung.

Um bei einer Störung der Verstelleinrichtung einen Motorschaden durch eine Kollision von Ventilen mit Kolben der Brennkraftmaschine sicher zu verhindern, kann weiters eine Einrichtung zur Veränderung des Ventilhubes vorgesehen sein. Dadurch ist es möglich, den Ventilhub im Fall einer unzulässigen Nockenwellenverstellung so weit zu verringern, dass eine Kollision der Ventile mit den Kolben jedenfalls ausgeschlossen ist. Dies ist insbesondere für Brennkraftmaschinen mit Selbstzündung vorteilhaft.

Besonders bevorzugt ist vorgesehen, dass die Einrichtung zur Veränderung des Ventilhubes eine Verstelleinrichtung zur axialen Verschiebung der Nockenwelle umfasst und dass die Nocken abgeschrägt ausgebildet sind, so dass bei einer axialen Verschiebung der Nockenwelle der Ventilhub verändert wird. Die Nockenwelle hat dabei zwei mögliche Positionen. In einer Arbeitsposition wird der für den Normalbetrieb erforderliche Ventilhub erzielt. Die Nockenwelle wird beispielsweise gegen die Wirkung einer Feder durch einen von Motoröl beaufschlagten Kolben in dieser Position gehalten. Wenn der Motoröldruck abfällt, oder wenn ein entsprechendes Elektroventil in einem Störfall öffnet, wird die Nockenwelle automatisch in eine Sicherheitsposition verschoben, in der ein nur sehr kleiner Ventilhub möglich ist, so dass keine Gefahr einer Beschädigung besteht.

In der Folge wird die vorliegende Erfindung anhand der in den Figuren dargestellten Ausführungsbeispiele näher erläutert.

Fig. 1          zeigt schematisch einen teilweisen Schnitt durch eine Brennkraftmaschine mit einer erfindungsgemäße Vorrichtung,

Fig. 2          eine Draufsicht auf die Variante von Fig. 1,

Fig. 3          eine weitere Ausführungsvariante im Schnitt,

Fig. 4                                      eine Explosionsdarstellung eines allgemeinen Harmonic-Drive-Getriebes,

Fig. 5A, 5B, 5C und 5D         Darstellungen zur Erklärung der Wirkungsweise eines Harmonic-Drive-Getriebes,

Fig. 6                                      eine weitere Ausführungsvariante im Schnitt,

Fig. 7                                      ein Detail einer weiteren Ausführungsvariante,

Fig. 8                                      einen Schnitt nach Linie VIII - VIII in Fig. 7,

Fig. 9                                      eine weitere Ausführungsvariante im Schnitt und

Fig. 10                                    schematisch eine Einrichtung zur Veränderung des Ventilhubes.

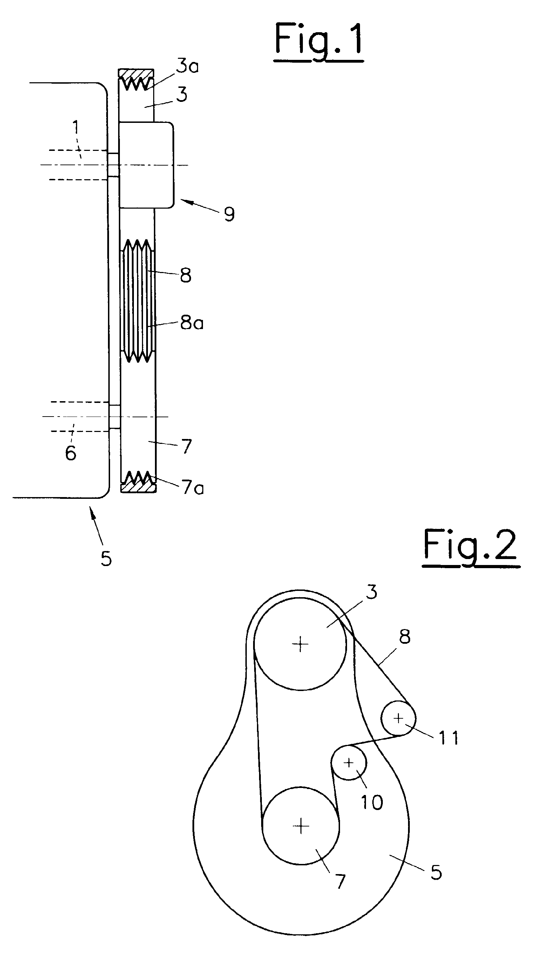

In der Fig. 1 ist das allgemeine Prinzip der Erfindung veranschaulicht. Angedeutet ist eine Brennkraftmaschine 5 mit einer Kurbelwelle 6 und einer Nockenwelle 1. Die Nockenwelle 1 wird über eine Riemenscheibe 7, die an der Kurbelwelle 6 angebracht ist und einen Keilrippenriemen 8 angetrieben. Der Keilrippenriemen 8 umschlingt ein Antriebsrad 3, das über eine allgemein mit 9 bezeichnete Verstelleinrichtung mit der Nockenwelle in Verbindung steht. Der Keilrippenriemen besitzt je nach Leistung der Brennkraftmaschine sechs bis neun in Längsrichtung verlaufende Rippen 8a, die in entsprechende Nuten 3a, 7a im Antriebsrad 3 und in der Riemenscheibe 7 eingreifen. Zur Vereinfachung der Darstellung sind in der Fig. 1 weniger Nuten 3a, 7a und Rippen 8a als in der Realität dargestellt.

In der Fig. 2 ist eine Stirnansicht einer Brennkraftmaschine 5 dargestellt. Der Keilrippenriemen 8 umschlingt dabei nicht nur das Antriebsrad 3 und die Riemenscheibe 7, sondern auch weitere Riemenscheiben 10 und 11 zum Antrieb nicht dargestellter Nebenaggregate, wie etwa der Lichtmaschine oder einem Kompressor für die Klimaanlage. Dadurch kann mit einem einzigen Riementrieb das Auslangen gefunden werden.

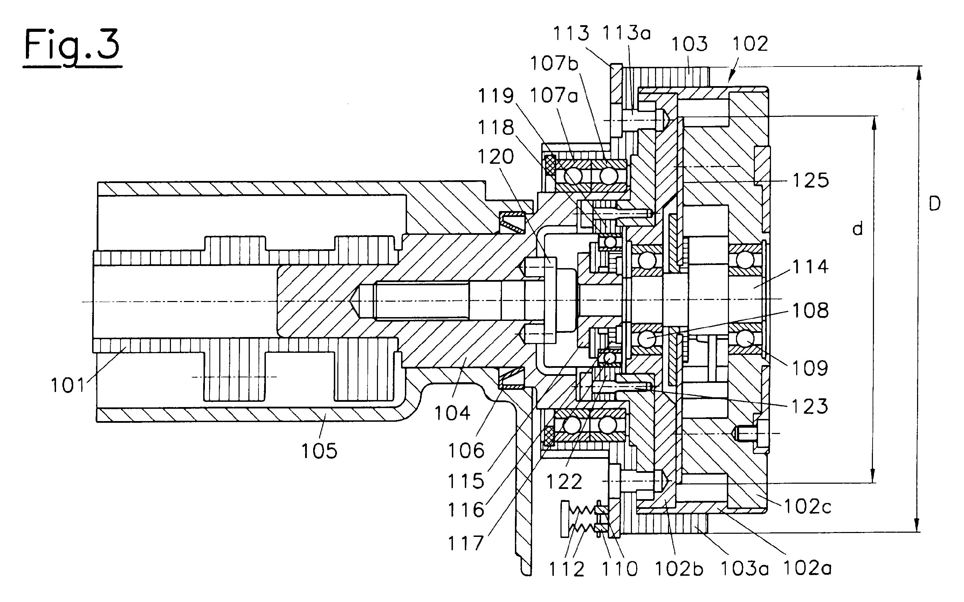

In der Fig. 3 ist eine erfindungsgemäße Vorrichtung zur Verstellung einer Nockenwelle 101 über einen Elektromotor 102 dargestellt. Der Antrieb der Nockenwelle 101 erfolgt über ein Antriebsrad 103, das als Riemenscheibe ausgebildet ist. Es kann sich dabei um eine Riemenscheibe für einen Flachriemen oder für einen Keilrippenriemen handeln, die hier nicht dargestellt sind. Ein Ende der Nockenwelle 101 ist mit einem Antriebsteil 104 fest verbunden, der gegenüber dem Gehäuse 105 mit einem Simmerring 106 abgedichtet ist.

Das Antriebsrad 103 ist mit zwei Wälzlagern 107a, 107b, die als Kugellager ausgebildet sind, auf dem Antriebsteil 104 gelagert. Der Elektromotor 102 besteht aus einem im wesentlichen zylindrischen Gehäuse 102a, das fest mit dem Antriebsrad 103 verbunden ist. Das Gehäuse 102a ist an seinen Stirnseiten durch Gehäusehälften 102b und 102c abgeschlossen. In den Gehäusehälften 102b und 102c sind die Wicklungen des Elektromotors 102 angeordnet. Weiters ist in den Gehäusehälften 102b, 102c über Wälzlager 108, 109 eine Welle 114 angeordnet, die über eine Hülse 115 fest mit dem elliptisch ausgebildeten Innenring 116 eines Wälzlagers 117 verbunden ist. Dieser Teil eines Harmonic-Drive-Getriebes wird in der Literatur zumeist als Wave-Generator bezeichnet. Der Außenring 118 des Wälzlagers 117 ist mit einem flexiblen, außen verzahnten Zahnrad 119 verbunden, das in seiner Gesamtheit topfförmig ausgebildet ist, und über eine Verschraubung 120 mit dem Halteteil 114 und somit mit der Nockenwelle 101 verbunden ist. Die äußere Verzahnung des Zahnrades 119 steht mit einem starren, innen verzahnten Zahnrad 122 an zwei Stellen in Eingriff, nämlich den Scheitelpunkten, der durch den Wave-Generator gebildeten Ellipse. Das außen verzahnte Zahnrad 122 ist über Schrauben 123 fest mit dem Antriebsrad 103 verbunden.

An einer Stirnseite des Antriebsrades 103 ist eine scheibenförmige Halterung 113 über Schrauben 113a fest verbunden. An der Halterung 113 sind Schleifringe 110 angebracht, die mit feststehenden Schleitkontakten 112 in Verbindung stehen, die als Kohlebürsten ausgebildet sind.

Zwischen den Gehäusehälften 102b und 102c des Elektromotors 102 ist ein Scheibenläufer 125 angeordnet. Der Außendurchmesser d des Scheibenläufers 125 entspricht etwa 80% des Außendurchmessers D des Antriebsrades 103. Er ist dabei vollständig innerhalb des Antriebsrades 103 angeordnet, und insgesamt ist mehr als die Hälfte des Elektromotors 102 räumlich innerhalb des Antriebsrades 103 angeordnet.

In der Folge wird der Betrieb der erfindungsgemäßen Vorrichtung näher erklärt werden. Bei nicht angetriebenem Elektromotor 102 findet keine Verstellung der Nockenwelle 101 gegenüber dem Antriebsrad 103 statt. Wenn jedoch die Welle 114 des Elektromotors 102 um eine Umdrehung gedreht wird, so kommen durch die Drehung des Wave-Generators nacheinander alle Zähne des flexiblen Zahnrades 118 mit dem innen verzahnten Zahnrad 122 in Eingriff. Wenn das außenverzahnte Zahnrad 118 beispielsweise achtundvierzig Zähne aufweist, während das innenverzahnte Zahnrad 122 fünfzig Zähne aufweist, so findet eine Relativbewegung dieser beiden Zahnräder im Ausmaß von zwei Zähnen, d. h. einer fünfundzwanzigstel Umdrehung statt. Dies entspricht auch dem Verdrehwinkel, um den sich die Nockenwelle 101 gegenüber dem Antriebsrad 103 verdreht. Durch das große Untersetzungsverhältnis ist das Moment, das vom Elektromotor 102 aufzubringen ist, relativ gering. Die Lagerung des Antriebsrades 103 ist beim erfindungsgemäßen Aufbau sehr einfach und da die Verbindung direkt über die Wälzlager 107a, 107b erfolgt, ist das auftretende Spiel im Harmonic-Drive-Getriebe gering. Die Schrauben 123 sind in einer entsprechenden kreisringförmigen Ausnehmung 126 des Halteteils 104 angeordnet. Wesentlich ist, dass durch die Drehung des Elektromotors 102 eine unbegrenzte Verstellung der Nockenwelle 101 möglich ist.

Der Außendurchmesser D des Antriebsrades 103 entspricht bei dieser für eine Viertakt-Maschine gedachten Lösung 196% des Durchmessers einer nicht dargestellten Riemenscheibe, die an der Kurbelwelle der Brennkraftmaschine angebracht ist. Daher eilt das Antriebsrad rechnerisch um 2% gegenüber dem theoretisch erforderlichen Übersetzungsverhältnis von 1:2 vor. Nimmt man einen Schlupf des Riementriebs von etwa 1% an, so verbleibt in der Praxis eine Voreilung von etwa 1%. Diese Voreilung wird laufend von der Verstelleinrichtung kompensiert. Da es sich dabei um eine Zurückverstellung handelt, ist der Aufwand an elektrischer Energie für die Verstellung minimal. Die verbleibende Voreilung stellt eine Reserve für Verschleiß oder vergrößerten Schlupf bei Überlastung des Riementriebs dar.

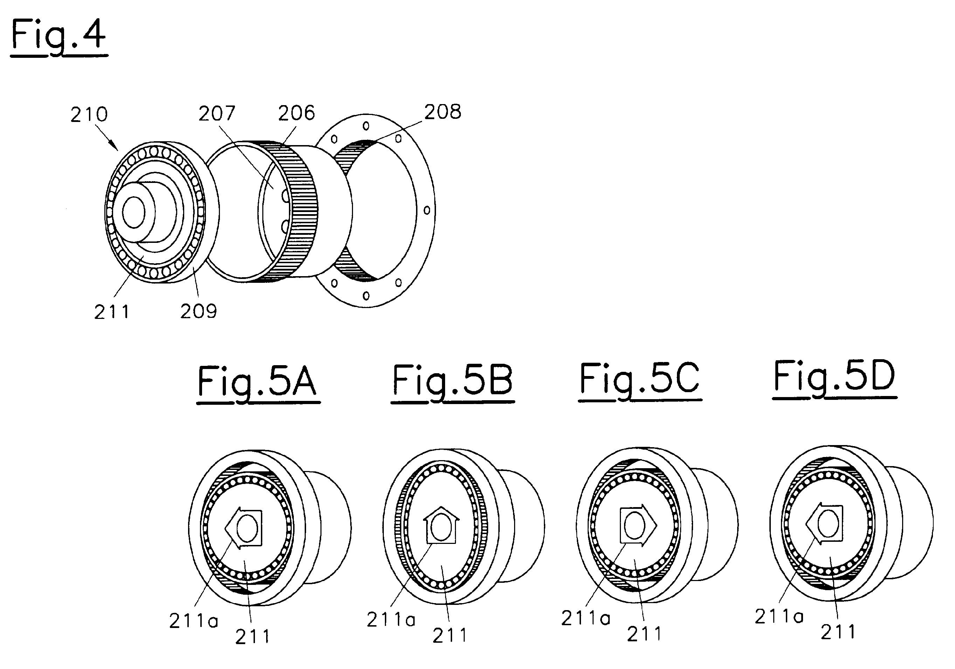

In der Fig.4 ist in einer axonometrischen Explosionsdarstellung das Harmonic-Drive-Getriebe detailliert dargestellt. Der Innenring 211 des Wälzlagers 210 ist elliptisch mit geringfügiger Exzentrizität. Der Außenring 209 stützt sich direkt an der Innenseite eines flexiblen Zahnrades 206 ab. Dieses Zahnrad 206 steht an zwei gegenüberliegenden Punkten mit einem starren, innenverzahnten Zahnrad 208 in Eingriff, das kreisförmig ausgebildet ist.

In den Fig. 5A, 5B, 5C und 5D ist die Funktionsweise dieses Harmonic-Drive-Getriebes dargestellt. Der Innenring 211 ist in der Stellung der Fig. 5B gegenüber der Stellung in der Fig. 5A um 90° in Richtung des Uhrzeigersinns verdreht. Die Fig. 5C zeigt eine weitere Drehung um 90° und die Fig. 5D eine Drehung um insgesamt 360°. Zur Erleichterung der Übersicht ist in den Fig. 5A, 5B, 5C und 5D eine pfeilförmige Markierung 211a angebracht. Die Zähnezahl des flexiblen Zahnrades 206 ist um zwei geringer, als die Zähnezahl des innenverzahnten Zahnrades 208. Daher ergibt sich ein geringfügiger Unterschied der Winkelgeschwindigkeit des Zahnrades 206 gegenüber dem Zahnrad 208. Aus den Fig. ist ersichtlich, dass sich die Markierung 206a, die gedanklich mit dem Zahnrad 206 verbunden ist, im Zuge der Drehbewegung des Innenrings 211 langsam in Gegenuhrzeigerrichtung bewegt. Insgesamt entspricht der Verdrehwinkel dem Zentriwinkel von zwei Zähnen des Zahnrads 206.

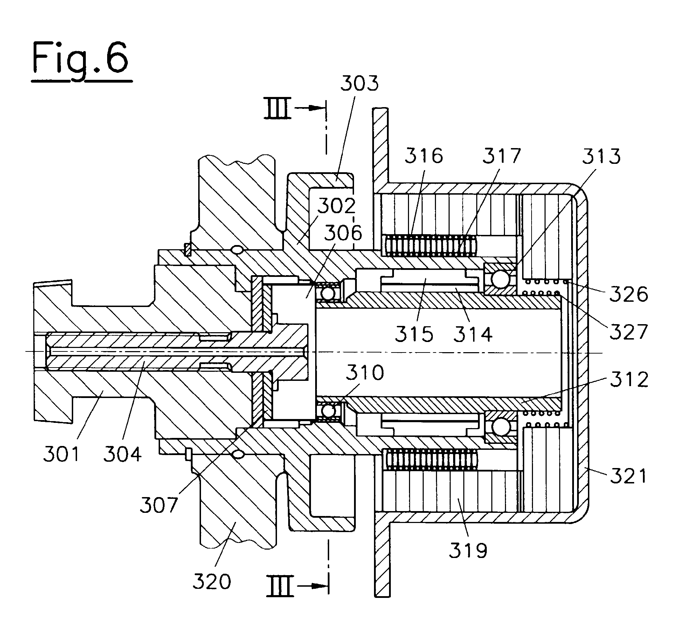

Die Vorrichtung von Fig. 6 besteht aus einer Nockenwelle 301 und einer relativ zur Nockenwelle 301 verdrehbaren Hülse 302, an der eine Riemenscheibe 303 einstückig angeformt ist. Über eine Schraube 304 und eine Scheibe 305 ist mit der Nockenwelle 301 ein Zahnrad 306 verbunden, das als dünnwandiger Zylinder ausgebildet ist, der an einem Ende durch eine starre Scheibe 307 abgeschlossen ist. Die Schraube 304 sichert die Scheibe 307 des Zahnrades 306 verdrehfest gegenüber der Scheibe 305 und der Nockenwelle 301. Ein Wälzlager 310 ist elliptisch ausgebildet, so dass das Zahnrad 306 mit einem innenverzahnten Bereich der Hülse 302 nur an zwei in Umfangsrichtung gegenüberliegenden Stellen in Eingriff steht. Die Zähnezahl des Zahnrades 306 ist um zwei kleiner als die Zähnezahl des innen verzahnten Bereiches 308, der ein Hohlrad bildet. Der Innenring des Wälzlagers 310 ist fest mit einem inneren Rotor 312 verbunden, der im wesentlichen rohrförmig ausgebildet ist. Am gegenüberliegenden Ende ist der Rotor 312 über ein Kugellager 313 an der Hülse 302 gelagert. Der innere Rotor 312 trägt an seinem äußeren Umfang eine Wicklung 314, die mit einer Wicklung 315 in Wechselwirkung steht, die am inneren Umfang der Hülse 302 ausgebildet ist, die den äußeren Rotor bildet.

Die elektrische Energie zur Ansteuerung der Wicklungen 314 und 315 wird durch feststehende Spulenanordnungen 316 und 326 erzielt, die mit den auf der Hülse 302 angebrachten Spulenanordnungen 317 und 327 zusammenwirken. Um die Übertragung des Stroms über den Luftspalt unabhängig von der Drehzahl der Hülse 302 zu gestalten, sind die Spulenanordnungen in Umfangsrichtung gewickelt. Bleche 319 dienen zur Verstärkung des elektromagnetischen Feldes.

Auf diese Weise können Stromstärke, Frequenz und Phasenlage der Ströme in den Wicklungen 314 und 315 völlig unabhängig voneinander eingestellt werden. Dies ermöglicht besondere Freiheitsgrade bei der Gestaltung der Steuerung.

Es wird angemerkt, dass in Fällen, bei denen das Verstellmoment gering ist, am inneren Rotor 312 auch Permanentmagnete angebracht sein können, die mit einer Wicklung 315 an der Hülse 302 zusammenwirken. Auf diese Weise kann mit einem einzigen Paar von Spulenanordnungen, die die Wicklung 315 an der Hülse 302 versorgen, das Auslangen gefunden werden, ohne eine weitere Spulenanordnung, wie bei der Ausführungsvariante von Fig. 6 vorsehen zu müssen.

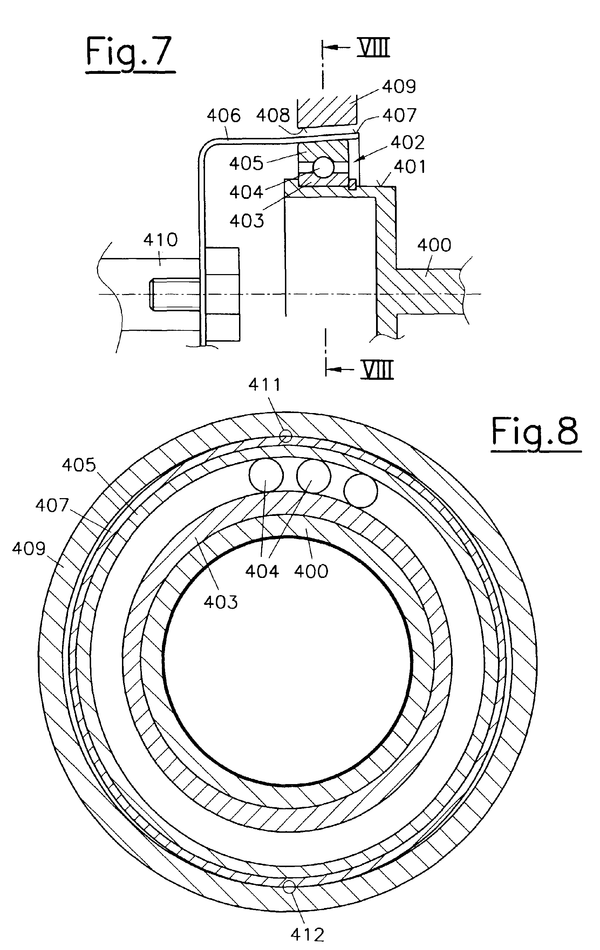

In der Fig. 7 ist eine bevorzugte Ausführungsvariante der Erfindung detailliert beschrieben. Das Getriebe der Fig. 7 besteht aus einer Antriebswelle 400, die an ihrem Ende eine Sitzfläche 401 aufweist, auf der ein Wälzlager 402 aufgekeilt ist, das als Kugellager ausgebildet ist. Das Wälzlager 402 besitzt einen Innenring 403, dessen äußerer Umfang elliptisch ausgebildet ist. Um die Herstellung zu vereinfachen, kann der Innenring 403 auch als dünnwandiger kreisringförmiger Körper hergestellt werden. Die elliptische Form wird in diesem Fall dadurch erzielt, dass die Sitzfläche 401 elliptisch ausgebildet ist und den darauf sitzenden Innenring 403 verformt.

Durch die Wälzkörper 404 wird der flexible Außenring 405 in eine elliptische Form gebracht. Da der äußere Umfang des Außenrings 405 leicht abgeschrägt ist, nimmt er insgesamt die Form eines elliptischen Kegels an. Am Außenring 405 liegt ein flexibler Eingriffsteil 406 an. Am äußeren Umfang des Eingriffsteils 406 ist die zweite Eingriffsfläche 407 angeordnet, die mit einer ersten Eingriffsfläche 408 in Eingriff steht, die am inneren Umfang eines ersten Eingriffsteils 409 angeordnet ist. Die erste Eingriffsfläche 409 ist kreiskegelförmig ausgebildet. Mit dem Eingriffsteil 406 steht eine Abtriebswelle 410 in Verbindung.

In der Folge wird die Wirkungsweise der erfindungsgemäßen Vorrichtung näher erklärt. In der in der Fig. 8 dargestellten Lage berühren sich die Eingriffsflächen 407 und 408 in den einander gegenüberliegenden Bereichen 411 und 412. Bei einer Umdrehung der Antriebswelle 400 wandern diese Bereiche 411 und 412 entlang der ersten Eingriffsfläche 408 bis in ihre ursprüngliche Lage. Die zweite Eingriffsfläche 407 rollt dabei auf der ersten Eingriffsfläche 408 ab. Da jedoch der Umfang $U_1$ der ersten Eingriffsfläche 408 geringfügig größer ist als der Umfang $U_2$ der zweiten Eingriffsfläche 407, dann dreht sich der Eingriffteil 406 geringfügig entgegen der Drehrichtung der Antriebswelle 400. Das Übersetzungsverhältnis i, definiert durch die Drehzahl der Antriebswelle gebrochen durch die Drehzahl der Abtriebswelle, entspricht dem Kehrwert der Exzentrizität $\varepsilon$, wenn diese nach folgender Gleichung definiert ist:

$$\varepsilon = (U_1 - U_2)/U_1$$

Je nach der Auswahl der verwendeten Materialien können Werte von i = $1/\varepsilon$ in einem Bereich von 100 bis 300 und darüber hinaus erzielt werden. Generell kann das Übersetzungsverhältnis um so größer werden, je härter die Materialien sind, die für die Eingriffsflächen 407 und 408 verwendet werden.

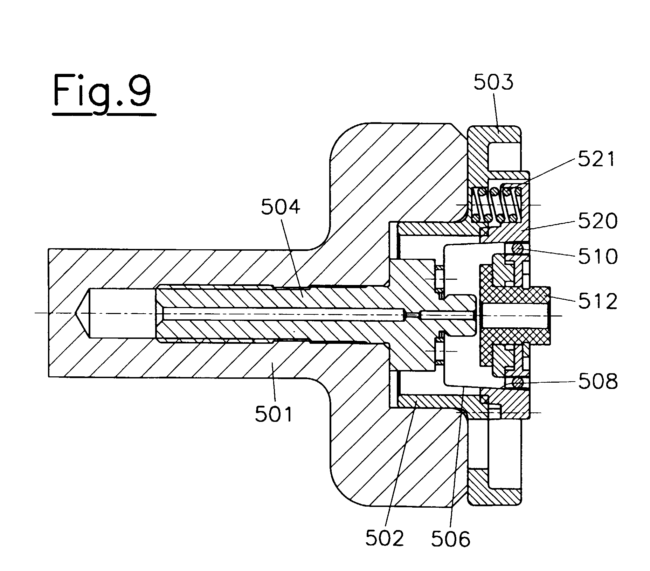

Die Fig. 9 zeigt ein Detail einer Verstelleinrichtung nach der obigen Ausführungsvariante. An der Nockenwelle 501 ist mit einer Schraube 504 ein als dünnwandiger Zylinder ausgebildetes Reibrad befestigt. Relativ zur Nockenwelle 501 verdrehbar ist eine Hülse 502, an der eine Riemenscheibe 503 einstückig angeformt ist. Ein Wälzlager 510 ist elliptisch ausgebildet, so dass das Reibrad 506 mit einem Eingriffsbereich der Hülse 502 nur an zwei in Umfangsrichtung gegenüberliegenden Stellen in Eingriff steht. Der Umfang des Reibrades 506 ist geringfügig kleiner als der eines innenverzahnten Eingriffsbereiches 508, der auf einem in Bezug auf die Hülse 502 in Axialrichtung verschiebbaren Ring 520 angeordnet ist und der ein Hohlrad bildet. Der Innenring des Wälzlagers 510 ist fest mit einem Antriebselement 512 verbunden, das mit einem nicht dargestellten Verstellmotor in Verbindung steht, der ähnlich wie bei den Lösungen von Fig. 3 oder Fig. 6 ausgebildet sein kann.

Um den erforderlichen Anpressdruck des Reibrades 506 auf dem Ring 520 dauernd zu gewährleisten, ist eine Feder 521 vorgesehen, die den Ring 520 gegenüber der Hülse 502 vorspannt.

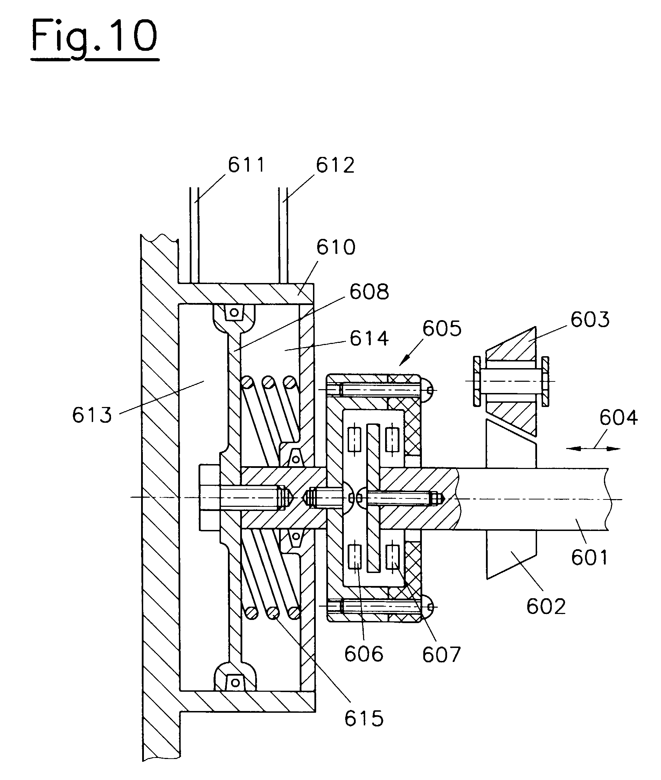

In der Fig. 10 ist schematisch eine Einrichtung zur Veränderung des Ventilhubes dargestellt. Eine Nockenwelle 601 weist kegelförmige Nocken 602 auf, die mit entsprechend abgeschrägten Rollenschlepphebeln 603 zusammenwirken, die die in der Fig. 10 nicht dargestellten Ventile betätigen. Die Nockenwelle 604 ist in der Richtung des Pfeils 604 in Axialrichtung verschiebbar. Die Verschiebung wird über ein Lagerelement 605 bewirkt, das zwei Axiallager 606 und 607 aufweist. Das Lagerelement 605 wird von einem Hydraulikkolben 608 betätigt, der in einem Zylinder 610 angeordnet ist. Ein erster Arbeitsraum 613 des Zylinders 610 wird über eine erste Hydraulikleitung 611 mit Motoröl versorgt, während ein zweiter Arbeitsraum 614 des Zylinders 610 über eine zweite Hydraulikleitung 612 mit Motoröl versorgt wird. Die Hydraulikleitungen 611, 612 stehen mit einem nicht dargestellten Elektroventil in Verbindung. In Normalbetrieb, d.h. wenn normaler Öldruck herrscht und wenn das Elektroventil mit einem den Normalbetrieb anzeigenden Signal von der Motorsteuerung versorgt wird, ist die erste Hydraulikleitung 611 mit Drucköl beaufschlagt, während die zweite Hydraulikleitung 612 mit dem Rücklauf verbunden ist. Dadurch wird der Kolben 608 gegen die Wirkung einer Feder 615 in der Fig. 10 nach rechts gedrückt. In dieser Lage der Nockenwelle 601 ist eine normale Ventilöffnung gegeben. Wenn durch eine Störung das erwähnte Signal am Elektroventil nicht anliegt, wird die erste Hydraulikleitung 611 mit dem Rücklauf verbunden, so dass die Feder 615 den Kolben 608 und damit die Nockenwelle 601 nach links verschiebt. Dadurch wird der Eingriff zwischen den Nocken 602 und den Rollenschlepphebeln 603 so verändert, dass nur mehr eine sehr geringe Ventilöffnung möglich ist. Unter Umständen ist so ein Notlaufbetrieb des Motors möglich. Die Verstellung kann noch beschleunigt werden, wenn das Elektroventil so ausgebildet ist, dass im Störfall die zweite Hydraulikleitung 612 mit Drucköl beaufschlagt wird. Dadurch wird die Kraft der Feder 615 verstärkt. In gleicher Weise erfolgt eine Verschiebung der Nockenwelle 601, wenn der Öldruck unter einen Grenzwert abfällt. Auf diese Weise kann ein Motorschaden nach einer Störung der Verstelleinrichtung oder nach einem Ölmangel in den meisten Fällen verhindert werden.

Die vorliegende Erfindung ermöglicht eine wesentliche Vereinfachung von Brennkraftmaschinen mit einer Einrichtung zur Verstellung der Nockenwelle. Es kann die Baugröße verringert werden und bei Wegfall eines Riementriebs können die Reibungsverluste minimiert werden, was den Kraftstoffverbrauch senkt. Insgesamt ergibt sich jedenfalls eine bedeutende Kosteneinsparung.

**Patentansprüche**

1. Verstelleinrichtung für die Nockenwelle (1, 101, 301, 401, 501, 601) einer Brennkraftmaschine mit innerer Verbrennung, mit einem Antriebsrad (3, 103, 303, 503) zum Antrieb der Nockenwelle (1, 101, 301, 401, 501, 601), das koaxial zur Nockenwelle angeordnet ist und das über einen Verstellmotor mit der Nockenwelle (1, 101, 301, 401, 501, 601) verbunden ist, um eine Relativbewegung zwischen dem Antriebsrad (3, 103, 303, 503) und der Nockenwelle (1, 101, 301, 401, 501, 601) zu bewirken, **dadurch gekennzeichnet**, dass das Antriebsrad (3, 103, 303, 503) über einen reibschlüssigen Antrieb mit einer Kurbelwelle (6) der Brennkraftmaschine (5) gekoppelt ist und dass der Verstellmotor dazu ausgebildet ist, eine unbegrenzte Relativbewegung zwischen dem Antriebsrad (3, 103, 303, 503) und der Nockenwelle (1, 101, 301, 401, 501, 601) zu bewirken.

2. Verstelleinrichtung nach Anspruch 1, **dadurch gekennzeichnet**, dass der Verstellmotor als Elektromotor (102) ausgebildet ist, der über ein Getriebe mit dem Antriebsrad (3, 103, 303, 503) und der Nockenwelle (1, 101, 301, 401, 501, 601) verbunden ist.

3. Verstelleinrichtung nach Anspruch 2, **dadurch gekennzeichnet**, dass der Elektromotor (102) mit der Nockenwelle (1, 101, 301, 401, 501, 601) oder dem Antriebsrad (3, 103, 303, 503) fest verbunden ist.

4. Verstelleinrichtung nach Anspruch 3, **dadurch gekennzeichnet**, dass der Elektromotor zwei konzentrisch zueinander angeordnete Rotoren (302, 312) umfasst, von denen einer direkt mit der Nockenwelle (301) oder dem Antriebsrad verbunden ist und von denen der andere mit dem Getriebe verbunden ist, und dass mit einem der Rotoren (302, 312) eine Spulenanordnung (317, 327) verbunden ist, die mit einer feststehenden Spulenanordnung (316, 326) in elektromagnetischer Wechselwirkung steht, um die Energie zur Ansteuerung von Wicklungen (314, 315) berührungslos zu übertragen, oder zu induzieren, die auf zumindest einem Rotor (302, 312) angeordnet sind.

5. Verstelleinrichtung nach Anspruch 4, **dadurch gekennzeichnet**, dass die Spulenanordnungen (316, 326; 317, 327) jeweils aus mindestens einer Wicklung bestehen, die im wesentlichen in Umfangsrichtung angeordnet ist.

6. Verstelleinrichtung nach einem der Ansprüche 4 oder 5, **dadurch gekennzeichnet**, dass ein Rotor des Elektromotors als im wesentlichen rohrformige Hülse (302) ausgebildet ist, die an ihrem inneren Umfang eine Wicklung (315) trägt, die mit einer Wicklung (314) oder einem Permanentmagneten am anderen Rotor (312) in elektromagnetischer Wechselwirkung steht, und dass die Hülse (302) an ihrem äußeren Umfang eine Spulenanordnung (317) aufweist, die mit einer feststehenden Spulenanordnung (316) zusammenwirkt.

7. Verstelleinrichtung nach einem der Ansprüche 2 bis 6, **dadurch gekennzeichnet**, dass der Elektromotor ein Gehäuse aufweist, das fest mit dem Antriebsrad (3, 103) verbunden ist, und das zumindest teilweise in diesem angeordnet ist, und dass der Elektromotor einen Rotor aufweist, der als Scheibenläufer ausgebildet ist, der in einem Spalt zwischen zwei Gehäusehälften ( 102b, 102c) des Elektromotors angeordnet ist.

8. Verstelleinrichtung nach Anspruch 7, **dadurch gekennzeichnet**, dass der Scheibenläufer innerhalb des Antriebsrades (3) angeordnet ist.

9. Verstelleinrichtung nach einem der Ansprüche 1 bis 8, **dadurch gekennzeichnet**, dass zwischen dem Antriebsrad (3, 103, 303, 503) und der Nockenwelle (1, 101, 301, 401, 501, 601) ein Getriebe angeordnet ist, bestehend aus einer ersten Eingriffsfläche (408), die am inneren Umfang eines ersten Eingriffsteils (409) angeordnet ist, einer zweiten Eingriffsfläche (407), die am äußeren Umfang eines flexiblen Eingriffsteils (406) angeordnet ist und mit der ersten Eingriffsfläche (408) in Eingriff steht, und einem zum ersten Eingriffsteil (409) und zum flexiblen Eingriffsteil (406) koaxialen Treibteil (400), an dem ein Wälzlager (402) mit einem unrund ausgebildeten Innenring (403) angeordnet ist, das einen flexiblen Außenring (405) aufweist, der mit dem flexiblen Eingriffsteil (406) verbunden ist und diesen an vorzugsweise zwei Stellen gegen den ersten Eingriffsteil (409) drückt.

10. Verstelleinrichtung nach Anspruch 9, **dadurch gekennzeichnet**, dass die Eingriffsflächen verzahnt ausgeführt sind.

11. Verstelleinrichtung nach Anspruch 9, **dadurch gekennzeichnet**, dass die erste Eingriffsfläche des ersten Eingriffsteils mit der zweiten Eingriffsfläche des flexiblen Eingriffsteils in einer reibschlüssigen Verbindung steht.

12. Verstelleinrichtung nach Anspruch 11, **dadurch gekennzeichnet**, dass der Außenring des Wälzlagers (402) kegelförmig mit kleinem Öffnungswinkel ausgebildet ist.

13. Verstelleinrichtung nach einem der Ansprüche 11 oder 12, **dadurch gekennzeichnet**, dass ein vorzugsweise als Feder ausgebildetes Anpressmittel vorgesehen ist, das die erste Eingriffsfläche in Axialrichtung auf die zweite Eingriffsfläche drückt.

14. Verstelleinrichtung nach einem der Ansprüche 1 bis 13, **dadurch gekennzeichnet**, dass das Antriebsrad (3) durch einen Keilrippenriemen (8) angetrieben ist.

15. Verstelleinrichtung nach einem der Ansprüche 1 bis 14, **dadurch gekennzeichnet**, dass das Antriebsrad (3) durch einen Riementrieb angetrieben ist, der auch Zusatzaggregate, wie etwa eine Lichtmaschine, eine Lenkhilfepumpe oder einen Klimakompressor antreibt.

16. Verstelleinrichtung nach einem der Ansprüche 1 bis 15, **dadurch gekennzeichnet**, dass das Übersetzungsverhältnis, mit dem das Antriebsrad (3, 103, 303, 503) angetrieben wird, von dem theoretisch erforderlichen Übersetzungsverhältnis abweicht, wobei vorzugsweise ein geringfügig schnellerer Antrieb gegeben ist.

17. Verstelleinrichtung nach Anspruch 16, **dadurch gekennzeichnet**, dass der Antrieb des Antriebsrades um 0,5% bis 4%, vorzugsweise um 1% bis 2,5% gegenüber dem theoretisch erforderlichen Übersetzungsverhältnis voreilt.

18. Verstelleinrichtung nach einem der Ansprüche 1 bis 17, **dadurch gekennzeichnet**, dass weiters eine Einrichtung zur Veränderung des Ventilhubes vorgesehen ist.

19. Verstelleinrichtung nach Anspruch 18, **dadurch gekennzeichnet**, dass die Einrichtung zur Veränderung des Ventilhubes eine Verstelleinrichtung zur axialen Verschiebung der Nockenwelle (601) umfasst und dass die Nocken (602) abgeschrägt ausgebildet sind, so dass bei einer axialen Verschiebung der Nockenwelle (601) der Ventilhub verändert wird.

## Fig.1

## Fig.2

Fig.3

## Fig.4

210  207  206  208

211  209

## Fig.5A

211a  211

## Fig.5B

211a  211

## Fig.5C

211a  211

## Fig.5D

211a  211

EP 1 052 379 A2

# Fig.6

Fig.7

Fig.8

# Fig.9

# Fig.10